# EUROPÄISCHE PATENTANMELDUNG

(11) **EP 1 471 650 A2**
(43) Veröffentlichungstag der Anmeldung: **27.10.2004**
(21) Anmeldenummer: 04002106.5
(22) Anmeldetag: 31.01.2004
(51) Int. Cl.: H04B 1/10, H04B 1/707

(54) **Verfahren zur störungsfreien Kommunikation beim Betrieb eines Störers**

(30) Priorität: 23.04.2003 DE 10318475
(71) Anmelder: Rheinmetall W & M GmbH, 29345 Unterlüss (DE)
(72) Erfinder: Jung, Markus, Dr., 29358 Eicklingen (DE)
(74) Vertreter: Dietrich, Barbara, Dipl.-Ing.

(57) **Zusammenfassung**

Problematisch ist, daß die Kommunikation der eigenen Kommunikationssysteme (1) gestört wird, sofern diese sich innerhalb der Reichweite auch eines eigenen Störers (10) und des vom Störer (10) abgedeckten Frequenzbereiches befinden.

Hiergegen sieht die Lösung vor, für das Kommunizieren und Senden der Teilnehmer (1.1, 1.2, 1.3) des eigenen Kommunikationssystems (1) untereinander sogenannte Zeitfenster im Störmuster zu verwenden. Diese werden nach einer Vorgabe vom Störer (10) vorab im Kommunikationssystem (1) festgelegt oder individuell kurzfristig und per Software geschaffen bzw. angepaßt. Da nur die miteinander kommunizierenden Teilnehmer (1.1, 1.2, 1.3) diese Zeitfenster kennen bzw. erkennen, erhalten bzw. senden auch nur sie in diesen Zeitfenstern entsprechenden Informationen. Die Informationen werden in bekannter Art und Weise komprimiert, damit sie in der Kürze der Zeitfenster vollständig gesendet und empfangen werden. In der Zeit des Störens können diese Informationen dann in gleichfalls bekannter Art und Weise dekomprimiert und ausgelesen werden.

## Beschreibung

Die Erfindung betrifft ein Verfahren zur störungsfreien Kommunikation von in Reichweite eines Störers bzw. Störsendern befindlichen Teilnehmern.

Im Bereich der nicht letalen Zerstörung von Zielen werden neben Hochleistungsmikrowellen-Quellen (HPM = high-power-microwave) auch explosivstoffgetriebene RF-Generatoren (RF = radio frequency) verwendet. Dabei wird durch zielgerichtetes Senden von RF-Strahlen die Elektronik eines Ziels zerstört oder die Funktion durch Blenden oder Stören beeinträchtigt, ohne das Ziel selbst zu zerstören. Eine solche Strahlenquelle ist in der DE 199 59 358 A1 offenbart.

Problematisch dabei ist, daß auch die Kommunikation der eigenen Kommunikationssysteme gestört wird, sofern diese sich innerhalb der Reichweite des Störers und des vom Störer abgedeckten Frequenzbereiches befinden. Ein Ausweichen auf Frequenzbereiche außerhalb der vom Störer abgedeckten Störbereiche ist dabei nicht die beste Lösung, da das Ausweichen neue Sende- und Empfangsgeräte erfordert. Ferner können die Reichweiten bei höheren Frequenzen stark eingeschränkt werden, beispielsweise durch Dämpfung etc.

Daher sieht die Erfindung vor, ein Verfahren zu schaffen, welches die Kommunikation innerhalb bzw. unterhalb der eigenen Kommunikationssysteme trotz eines eigenen Störers bzw. Störsenders ermöglicht. Die Aufgabe der Erfindung liegt in der Sicherung der Kommunikation beim Betrieb von UWB - Breibandstörern.

Gelöst wird die Aufgabe durch die Merkmale des Patentanspruchs 1.

Aus der Telekommunikation ist bekannt, dass einem Mobiltelefon , welches sich auf eine Basisstation einlogt, zur Übertragung und zum Empfang ein Zeitfenster zugewiesen bekommt. Dabei erfolgt die Datenübertragung komprimiert und in gewissen Zeitabständen, die zwischen Sender und Empfänger vereinbart werden. Diese Zuweisung durch die Basisstation erfolgt automatisch und wird vom Mobiltelefon erkannt. Ein sogenannter Kommunikationschip ist dafür selbstprogrammierbar gestaltet.

Ausgehend von der Idee, ähnlich wie beim Mobiltelefon, für das Kommunizieren und Senden der Teilnehmer eines Kommunikationssystems während des Betriebes eines eigenen Störers untereinander sogenannte Zeitfenster zu verwenden. Diese werden nach einer Vorgabe, z.B. durch den Störer, vorab im Kommunikationssystem festgelegt oder individuell kurzfristig und per Software geschaffen bzw. angepaßt. Da nur die miteinander kommunizierenden Teilnehmer diese Zeitfenster kennen bzw. erkennen, erhalten bzw. senden auch nur sie in diesen Zeitfenstern entsprechenden Informationen. Die Informationen werden in bekannter Art und Weise komprimiert, damit sie in der Kürze der Zeitfenster vollständig gesendet und empfangen werden. In der Zeit des Störens können diese Informationen dann in gleichfalls bekannter Art und Weise dekomprimiert und ausgelesen werden.

Den eigenen Kräften wird somit eine Möglichkeit gegeben, daß die im Frequenzbereich des Störers verwendete Funkkommunikation durch Modifikation des zeitlichen Sende- und Empfangsverhalten aufrechterhalten wird.

Die Zeitfenster im Zeitbereich für die eigene Kommunikation werden vorzugsweise durch eine zeitliche Synchronisation des Störsignals und des Sendesignals geschaffen, die von den zu störenden Kommunikationssystemen nicht vorhersehbar und daher nicht nutzbar sind. Die eigenen Kommunikationssysteme senden Daten in einer Art Zeitkompression. Diese Synchronisation stellt dabei sicher, dass die eigenen Kommunikationssysteme, die auf das mit dem Störer vereinbarte zeitlich abgestrahlte Störmuster abgestimmt sind, weiterhin miteinander kommunizieren können.

Möglich ist, daß der Störer ein festes sich wiederholendes Störmuster mit einer hohen Pulswiederholrate sendet, wobei die eigenen Teilnehmer des Kommunikationssystems den zeitlichen Verlauf analysieren und in den dann vorgesehenen Zeitlükken senden. Bevorzugt teilen sich die Kommunikationsteilnehmer des Kommunikationssystems die Lücken mit, so daß diese dann in den für die eigenen Übertragung vorgesehenen Störlücken Signale empfangen und senden können.

Eine weitere Möglichkeit besteht darin, daß vor Beginn des Aussendens des Störpulses der Störer mit den anderen Kommunikationsteilnehmern Kontakt aufnimmt und mit diesen die Störlücken vereinbart.

Von Vorteil ist, daß bestehende Sendefrequenzen mit den bekannten Reichweiten weiterhin genutzt werden können. Zudem kann das Störmuster jederzeit modifiziert werden, um sicherzustellen, daß die gegnerischen Kommunikationseinrichtungen gestört werden.

Die Synchronisation mit dem Störer kann mittels einer Zusatzbaugruppe bzw. Modifikation durch einen Kommunikationschip im eigenen Kommunikationsteilnehmer durchgeführt werden. Derartige Kommunikationschips sind selbstprogrammierbar und aus der Mobilelektronik bekannt, und werden beispielsweise in Geräten der Fa. Motorola, Ericsson oder Siemens eingesetzt.

Anhand einer skizzenhaften Darstellung soll das Verfahren kurz erläutert werden.

In einem Gebäude / Haus 11 oder ,nicht dargestellt, in freier Natur befinden sich eigene Kommunikationsteilnehmer 1.1, 1.2, 1.3 (bis 1.n), welche das erste Kommunikationssystem 1 bilden, sowie weitere, fremde Kommunikationseinrichtungen 2.1, 2.2, 2.3 (bis 2.n) , die ein zweites Kommunikationssystem 2 bilden. Ein mit 10 gekennzeichneter Störer arbeitet innerhalb der Reichweite beider Kommunikationssysteme 1, 2 und ist zugehörig zum Kommunikationssystem 1.

Der Störer 10, ein UWB - Breitband - Störer, sendet einen (extrem) kurzen Puls (Pulsbreite - 1 ns) mit einer Wiederholrate von einigen MHz aus. Dies führt bei den zu störenden Kommunikationssystemen 1, 2 zu einem Rauschpegel, der deutlich über dem eigentlichen Signalpegel liegt. Ein Empfang innerhalb beider Systeme 1, 2 ist nicht möglich.

Durch Auslassen von Störpulsen oder Variationen in der Repetitionsrate im Störmuster des Störers 10 werden für das gegnerische Kommunikationssystem 2 nicht vorhersehbare Zeitfenster für die eigene Kommunikation innerhalb des Kommunikationssystems 1 geschaffen.
Die Synchronisation bzw. Anpassung der Sende - / Empfangsfrequenzen zwischen dem Störer 10 und den eigenen Kommunikationsteilnehmer 1.1, 1.2, 1.3 auf diese Störfenster des Störers 1 schafft die Möglichkeit der eigenen Kommunikation und kann mittels einer Zusatzbaugruppe 1.11, 1.21, 1.31 bzw. Modifikation durch einen Kommunikationschip im eigenen Kommunikationsteilnehmer 1.1, 1.2, 1.3 durchgeführt werden.
Zusätzlich werden die eigenen Daten in dem gegenüber der normalen Kommunikation deutlich kleineren Zeitfenstern komprimiert. Dies kann z. B. durch Erhöhung der Taktfrequenz bzw. der Übertragungsbandbreite erfolgen. So wird beispielsweise ein Signal mit einer Bandbreite von 5 kHz und einer zeitlichen Länge von 1µs dann mit einer Bandbreite von 50 kHz und einer zeitlichen Länge von 100 ns gesendet.

Vorteilhaft ist, wenn die Empfangsstufen der eigenen Kommunikationsteilnehmer 1.1, 1.2, 1.3 nur während der für die Übertragung vorgesehenen Zeitfenster mit der Antenne verbunden sind. So können die vom Störer 10 verursachten Übersteuerungen vermieden werden. Das Zuschalten bzw. Abschalten erfolgt vorzugsweise mittels eines Schalters, der über die Codierung, aus der auch die Zeitfenster ermittelt werden, angesteuert wird.

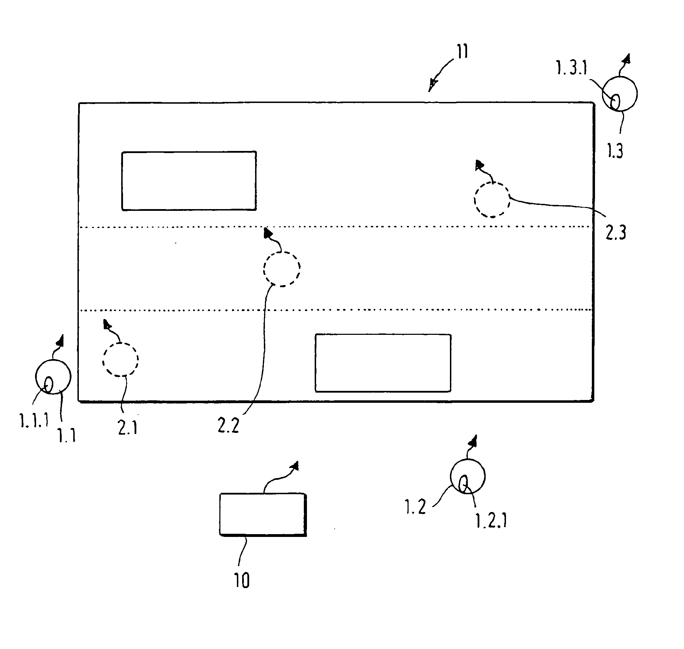

## Patentansprüche

1. Verfahren zur Schaffung einer Kommunikation von mehreren Teilnehmern (1.1, 1.2, 1.3) eines Kommunikationssystems (1) untereinander beim Betrieb wenigstens eines Störers (10), welcher dem Kommunikationssystem (1) zugehörig ist, **dadurch gekennzeichnet, dass**
- eine zeitliche Synchronisation des Störsignals des Störers (10) und des Sendesignals der Teilnehmer (1.1, 1.2, 1.3) erfolgt, wodurch
- in den mit dem Störer (10) vereinbarten zeitlichen Störmuster bzw. Störsignal geschaffenen Zeitfenstern die Kommunikation zwischen den Teilnehmern (1.1, 1.2, 1.3) stattfindet.

2. Verfahren nach Anspruch 1, **dadurch gekennzeichnet, dass** die Übertragung der Daten und Informationen zeitkomprimiert durch Erhöhen der Taktrate bzw. Übertragungsbandbreite erfolgt.

3. Verfahren nach Anspruch 1 oder 2, **dadurch gekennzeichnet, dass** der Störer (10) ein festes, sich wiederholendes Störmuster sendet, welches von den Teilnehmern (1.1, 1.2, 1.3) analysiert wird, um die Zeitfenster oder vorgesehenen Lücken zu erkennen, in denen sie senden und empfangen können.

4. Verfahren nach Anspruch 3, **dadurch gekennzeichnet, dass** die Teilnehmer (1.1, 1.2, 1.3) sich diese Lücken gegenseitig mitteilen.

5. Verfahren nach Anspruch 1 oder 2, **dadurch gekennzeichnet, dass** vor Beginn des Aussendens des Störmusters der Störer (10) mit den Teilnehmern (1.1, 1.2, 1.3) Kontakt aufnimmt und mit diesen die Zeitfenster bzw. Lücken während des Störbetriebes vereinbart.

6. Verfahren nach einem der Ansprüche, **dadurch gekennzeichnet, dass** das Störmuster modifizierbar ist.
